# EUROPÄISCHE PATENTSCHRIFT

(11) **EP 0 962 306 B1**
(45) Veröffentlichungstag und Bekanntmachung des Hinweises auf die Patenterteilung: **10.04.2002**
(21) Anmeldenummer: 99108244.7
(22) Anmeldetag: 27.04.1999
(51) Int. Cl.: B29C 65/02, B31B 19/64

(54) **Vorrichtung und Verfahren zum Verschweissen von Folienmaterial**
Device and procedure for welding sheet material
Dispositif et procédure pour souder de matériaux en feuilles

(30) Priorität: 04.06.1998 DE 19825064
(43) Veröffentlichungstag der Anmeldung: 08.12.1999
(73) Patentinhaber: INDAG Gesellschaft für Industriebedarf mbH & Co. Betriebs KG, 69214 Eppelheim/Heidelberg (DE)
(72) Erfinder:
(74) Vertreter: Grünecker, Kinkeldey, Stockmair & Schwanhäusser Anwaltssozietät

(56) Entgegenhaltungen:
- EP-A- 0 335 270
- US-A- 2 660 219
- US-A- 5 080 747

## Beschreibung

Die Erfindung betrifft eine Schweißvorrichtung zum Verschweißen von Folienmaterial mit einer Folienfördereinrichtung und einer Schweißeinrichtung mit einem Schweißkopf, und ein Verfahren zum Verschweißen von Folienmaterial.

Bei einer Schweißvorrichtung zum Verschweißen von Folienmaterial werden zwei oder mehrere Folien einer Schweißeinrichtung zugeführt und dort mit Hilfe eines Schweißkopfes, der auf die zusammengelegten Folien abgesenkt wird und an gewünschten Stellen Hitze auf die Folien überträgt, miteinander verschweißt. Wenn in dem vorliegenden Text von Schweißen bzw. Schweißeinrichtung die Rede ist, so ist damit auch ein Heißklebeprozeß mit umfaßt, bei welchem ein Klebematerial zwischen die Folien gebracht wird, das durch Hitze zur Verbindung der Folienmaterialien führt.

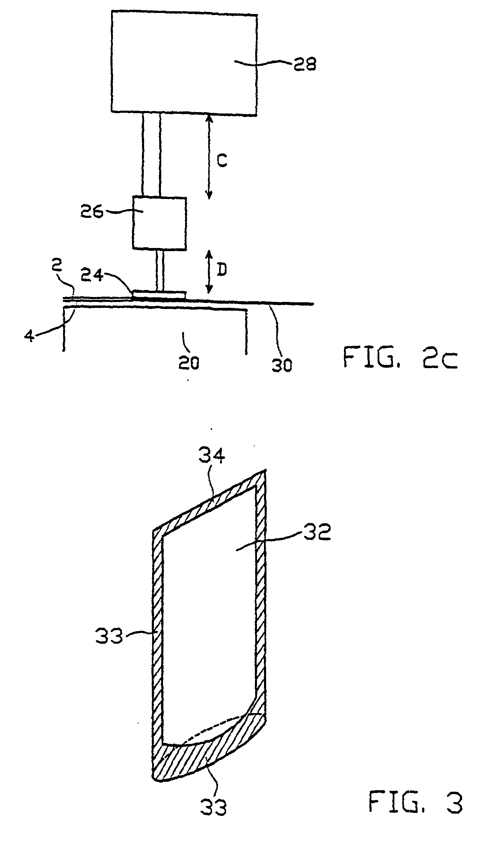

Ein derartiger Schweißprozeß wird z.B. bei der Herstellung von Folienbeuteln, z.B. Getränkefolienbeuteln, eingesetzt Zwei Folienmaterialien werden aufeinandergelegt, die die Seitenfolien des Folienbeutels bilden sollen. In einem Kantenbereich wird ggf. eine Bodenfolie dazwischengelegt. An zwei direkt aufeinanderliegenden Kanten des Seitenfolienmaterials und an der dritten Kante, an der sich ggf. die Bodenfolie befindet, werden die Folien miteinander verschweißt Die vierte Kante der jeweiligen Folienmaterialien wird nach der Füllung des Folienbeutels durch Verschweißen verschlossen. Ein Beispiel eines solchen Folienbeutels ist z.B. in Figur 3 gezeigt, wobei die Schweißnähte 33 in dem ersten geschilderten Prozeß gebildet werden und die Schweißnaht 34 nach der Füllung des Folienbeutels.

In einer automatisierten Fertigungsanlage werden Folienstränge zum Verschweißen zugeführt, die nach dem Schweißvorgang zerschnitten werden, um einzelne Einheiten zu bilden. Die Folienstränge werden zusammengelegt und unter den Schweißkopf geführt. Dieser senkt sich ab. Dabei muß er einen mehrere Zentimeter umfassenden Absenkweg überbrücken. Nach dem Aufdrücken auf die Folienmaterialien hebt sich der Schweißkopf wieder und die Folienstränge werden um eine einem Folienbeutel entsprechenden Strecke weiterbewegt, bevor sich der Schweißkopf wiederum auf das weiterbewegte Folienmaterial absenkt Um einen hohen Durchsatz zu gewährleisten, wird der Schweißkopf auf einer konstant hohen Temperatur gehalten, um zeitraubende Aufwärm- und Abkühlvorgänge überflüssig zu machen. Daher ist es nötig, daß der Schweißkopf in den Betriebszuständen, in denen keine Schweißung stattfindet, weit genug von dem Folienmaterial entfernt ist, um ein Überhitzen bzw. Verschmoren des Folienmateriales zu verhindern. Dies ist z.B. nötig, wenn die gesamte Schweißvorrichtung angehalten worden ist, um eine Fehlfunktion zu beseitigen.

Der daher einige Zentimeter betragende Hub- bzw. Absenkweg des Schweißkopfes benötigt jedoch bei einer automatisierten Fertigungsanlage bei heute realisierten Durchsatzgeschwindigkeiten eine unerwünscht lange Zeit .

Ein Wärmeschweißmechanismus mit linear verschiebbaren Schweißbalken ist aus US 5080747 bekannt. Eine Wärmeschweißmaschine ist aus US 2660219 bekannt

Aufgabe der vorliegenden Erfindung ist es daher, eine Schweißvorrichtung und ein Verfahren zum Verschweißen von Folienmaterial anzugeben, das ein schnelles Anheben bzw. Absenken des Schweißkopfes ermöglicht, wobei in jedem Betriebszustand gewährleistet ist, daß ein Verschmoren oder Schädigen des Folienmateriales unmöglich ist.

Diese Aufgabe wird durch eine Schweißvorrichtung mit den Merkmalen des Anspruchs 1 und ein Schweißverfahren mit den Merkmalen des Anspruchs 12 gelöst.

Die erfindungsgemäße Schweißvorrichtung kann mindestens drei Betriebsstellungen einnehmen. Die erste Betriebsstellung ist die Schweißstellung zur Durchführung der Folienverschweißung. In diesem Betriebszustand befindet sich der Schweißkopf direkt auf den zu verschweißenden Folienmaterialien und führt zu der Erhitzung und Verschweißung bzw. Heißverklebung der Folienmaterialien in jenen Bereichen, auf denen die erhitzte Fläche des Schweißkopfes aufliegt. Die zweite Betriebsstellung ist eine Zwischenstellung, in der der Schweißkopf einen ersten vorgegebenen Abstand von der Schweißstellung hat. In dieser Zwischenstellung befindet sich der Schweißkopf, während das Folienmaterial um eine zu verschweißende Einheit weiterbewegt wird. Die dritte Betriebsstellung ist eine Ruhestellung, in der der Schweißkopf einen zweiten vorgegebenen Abstand von der Schweißstellung hat, der größer ist als der erste Abstand. In dieser Ruhestellung befindet sich der Schweißkopf, wenn die Schweißvorrichtung das Folienmaterial nicht mit ausreichender Geschwindigkeit fördert, um ein Überhitzen oder Verschmoren zu verhindern.

Die erfindungsgemäße Schweißvorrichtung ermöglicht also einen kurzen Hub- bzw. Absenkvorgang zwischen der Schweißstellung und der Zwischenstellung, so daß im Normalbetrieb diese Bewegung des Schweißkopfes zu keinem Zeitverlust führt, auch wenn die gesamte Schweißvorrichtung mit hoher Geschwindigkeit betrieben wird. Im Falle einer Fehlfunktion oder bei geringer Geschwindigkeit der gesamten Anlage nimmt der Schweißkopf eine Ruhestellung ein, die einen größeren Abstand von dem Folienmaterial hat, so daß eine Schädigung des Folienmateriales durch den heißen Schweißkopf vermieden wird.

Der Abstand der Ruhestellung von der Schweißstellung kann so gewählt sein, daß eine Schädigung, z.B. ein Verschmoren, des Folienmateriales durch die Hitze des Schweißkopfes deutlich verzögert wird. In besonders vorteilhafter Ausgestaltung wird der Abstand der Ruhestellung und der Schweißstellung jedoch so gewählt, daß überhaupt keine Zerstörung des Folienmateriales durch die Hitze des Schweißkopfes auftreten kann. Auf diese Weise ist gesichert, daß unabhängig von der Dauer der Unterbrechung bzw. Verlangsamung des Betriebes der Schweißvorrichtung keine Schädigung des Folienmateriales auftreten kann.

Eine besonders vorteilhafte Ausgestaltungsform umfaßt eine Wärmeabschirmung, die in der Ruhestellung zwischen den heißen Schweißkopf und das Folienmaterial gebracht wird. Speziell bei besonders temperaturempfindlichen Folienmaterialien sichert eine solche zusätzliche Abschirmung, daß das Folienmaterial durch die Hitze des Schweißkopfes nicht geschädigt wird. Eine solche Wärmeabschirmung kann z.B. ein schwenkbares Abschirmblech umfassen.

Günstige Werte für den Abstand der Ruhestellung von der Schweißstellung liegen im Bereich einiger Zentimeter. Dieser Abstand ist im wesentlichen von der Art des verwendeten Folienmateriales, der Schweißtemperatur sowie der Geometrie des verwendeten Schweißwerkzeuges abhängig. Vorteilhafterweise wird für den Abstand der Schweißstellung zu der Zwischenstellung ein Abstand von einigen Millimetern gewählt Ein so geringer Abstand gewährleistet eine hohe Durchsatzgeschwindigkeit aufgrund des geringen Hubweges.

Auf einfache Weise läßt sich die Bewegung des Schweißkopfes zwischen der Zwischenstellung und der Schweißstellung mit Hilfe einer ersten Pneumatik erreichen. Aufgrund des geringen Abstandes, der zu überwinden ist, benötigt die Pneumatik nur sehr wenig Druckluft. Eine zweite Pneumatik wird eingesetzt, um den Schweißkopf zusammen mit der ersten Pneumatik in die Ruhestellung zu bewegen.

Die Bewegung des Schweißkopfes und des dazugehörigen Antriebes kann z.B. mechanisch ausgelöst werden. Eine zuverlässige Realisierung wird durch eine Steuerung dargestellt, mit deren Hilfe die Fördereinrichtung zur Weiterförderung des Folienmateriales angesteuert wird, während der Schweißkopf sich in der Zwischenstellung befindet.

Im folgenden wird die Erfindung anhand eines bevorzugten Ausführungsbeispieles im Zusammenhang mit den Figuren näher erläutert.

Dabei zeigt
- Figur 1: eine schematische Gesamtansicht einer erfindungsgemäßen Folienschweißeinrichtung,
- Figur 2a: eine Detailansicht der Figur 1, die Schweißeinrichtung in einer Ruhestellung zeigend,
- Figur 2b: eine Detailansicht der Figur 1, die Schweißeinrichtung in einer Zwischenstellung zeigend,
- Figur 2c: eine Detailansicht der Figur 1, die Schweißeinrichtung in einer Schweißstellung zeigend, und
- Figur 3: einen verschweißten und unverschlossenenFolienbeutel.

Die im folgenden beschriebene Ausführungsform ist eine Schweißvorrichtung zur Herstellung von Folienbeuteln, z.B. Getränkefolienbeuteln. Ein solcher Getränkefolienbeutel ist in Figur 3 gezeigt. Der Folienbeutel 32 umfaßt zwei Seitenfolien und eine als Standboden ausgebildete Bodenfolie. Als Material kommt z.B. Aluminiumlaminatfolie in Betracht. Die Seitenfolien und die Bodenfolie sind entlang der Schweißnähte 33 miteinander verschweißt. Alternativ kann auch eine Heißverklebung stattfinden. Die Kopfnaht 34 wird nach dem Füllen des Folienbeutels in einer weiteren Verarbeitungsstation durchgeführt.

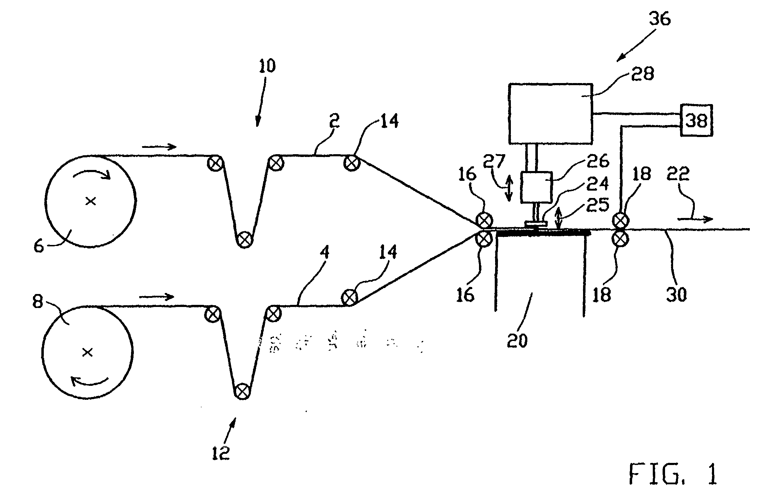

Figur 1 zeigt in schematischer Seitenansicht eine erfindungsgemäße Schweißvorrichtung für Folienbeutel. 6 bzw. 8 bezeichnen Vorratsrollen zur Zuführung der Folienmaterialien. 10 und 12 bezeichnen jeweils Spannvorrichtungen, die eine ausreichende Spannung der Folienmaterialien 2, 4 gewährleisten. 14 und 16 bezeichnen Umlenkrollen, während 18 eine Abzugseinrichtung für das verschweißte Folienmaterial 30 bezeichnet. Eine solche Abzugseinrichtung kann z.B. durch angetriebene Walzen gebildet sein, die durch Reibschluß das Folienmaterial weiterbefördern. 36 bezeichnet eine Schweißvorrichtung mit einer ersten Pneumatik 26, die auf den Schweißkopf 24 wirkt und einer zweiten Pneumatik 28, die auf die erste Pneumatik wirkt. Die Bewegung des Schweißkopfes 24, die durch die Pneumatik 26 ausgelöst wird, ist durch den Pfeil 25 dargestellt, während die Bewegung der ersten Pneumatik 26, die durch die Pneumatik 28 ausgelöst wird, durch den Pfeil 27 dargestellt ist. Eine Steuerung 38 regelt die Bewegung der Pneumatiken 26 und 28 und der Abzugswalzen 18. Die Bewegung der verschweißten Folienmaterialien 30 ist durch den Pfeil 22 angedeutet.

Figur 2a zeigt im Detail die Schweißeinrichtung 36 in der Ruhestellung. Der Abstand des Schweißkopfes 24 von dem Folienmaterial ist mit x bezeichnet. A bzw. B bezeichnen die Abstände der ersten Pneumatik 26 von der zweiten Pneumatik 28 bzw. den Abstand des Schweißkopfes 24 von der ersten Pneumatik 26.

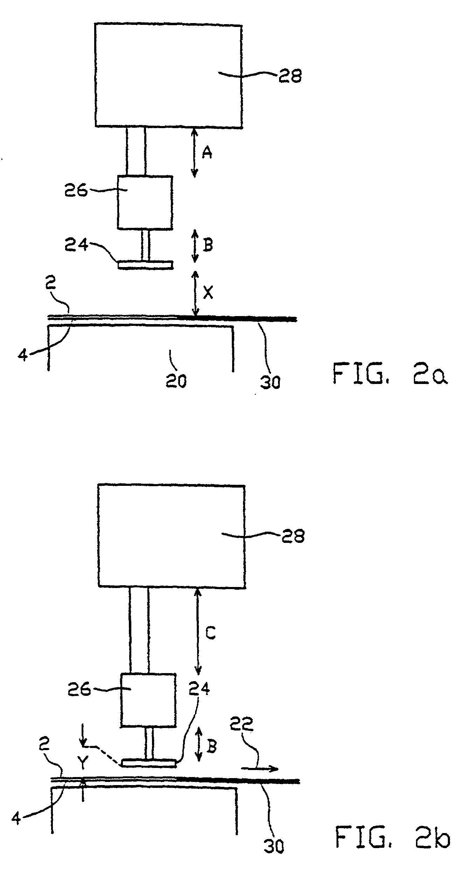

Figur 2b zeigt dieselbe Schweißvorrichtung in der Zwischenstellung. Der Abstand des Schweißkopfes 24 ist mit y bezeichnet, wobei y kleiner ist als x. C bezeichnet den Abstand der ersten Pneumatik 26 von der zweiten Pneumatik 28, wobei C um denselben Betrag größer ist als A, um welchen x größer ist als y.

Figur 2c zeigt dieselbe Schweißeinrichtung in der Schweißstellung. Der Schweißkopf 24 befindet sich direkt auf dem Folienmaterial. Die Folienmaterialien 2 und 4 bzw. das verschweißte Folienmaterial 30 liegen dabei auf einer Auflage 20 auf. Der Abstand des Schweißkopfes 24 von der Pneumatik 26 beträgt D, wobei D größer ist als der Abstand B, den der Schweißkopf 24 von der ersten Pneumatik 26 in der Zwischenbzw. Ruhestellung einnimmt.

Das erfindungsgemäße Verfahren wird nun am Betrieb der gezeigten Ausführungsform der erfindungsgemäßen Schweißvorrichtung erläutert. Die Folienmaterialien 2 und 4 werden von den Vorratsrollen 6 und 8 abgezogen, wobei eine ausreichende Spannung auf hier nicht interessierende Weise z.B. durch federbeaufschlagte Spannvorrichtungen 10 und 12 aufrechterhalten wird. Umlenkrollen 14 und 16 führen die Folienmaterialien zusammen. Die zu verschweißenden Folienmaterialien 2 und 4 werden dabei mit Hilfe der Abzugswalzen 18 taktweise bewegt. Die während eines Taktes zurückgelegte Strecke entspricht dabei der Breite eines Folienbeutels 32. Während der Bewegung des Folienmateriales 2, 4 bzw. des verschweißten Folienmateriales 30 in Richtung 22 befindet sich der Schweißkopf 24 in einem Abstand y von dem Folienmaterial (s. Figur 2b). Sobald die Bewegung der Abzugswalzen 18 durch die Steuerung 38 gestoppt wird, gibt die Steuerung 38 ein Signal an die erste Pneumatik 26, woraufhin der Abstand B des Schweißkopfes 24 von dieser Pneumatik 26 auf den Abstand D vergrößert wird (s. Figur 2c). Der Schweißkopf 24 befindet sich nun in direktem Kontakt mit dem zu verschweißenden Folienmaterial 2, 4 und drückt dieses gegen die Auflage 20. Er weist in an sich bekannter Weise ausreichend erhitzte Bereiche auf, die zu einer Verschweißung des Folienmateriales entlang der gewünschten Schweißnähte führt. Diese Schweißnähte bilden bei dem Beispiel der Folienbeutel (Figur 3) später die Seitenkanten bzw. die Bodenkanten 33.

Ist die Verschweißung entlang der gewünschten Schweißnähte durchgeführt, wobei die dazu notwendige Zeitdauer im Vorhinein bestimmt werden kann, gibt die Steuerung 38 ein Signal an die erste Pneumatik 26 den Schweißkopf 24 wieder anzuheben, so daß der Abstand des Schweißkopfes 24 von der Pneumatik 26 wieder B beträgt. Der Schweißkopf 24 befindet sich dann wieder in der Zwischenstellung. Gleichzeitig gibt die Steuerung 38 ein Signal an die Abzugswalzen 18, das Folienmaterial um eine Einheit, z.B. die Breite eines Folienbeutels 32, weiterzubewegen. Nach Abschluß dieser Bewegung gibt die Steuerung 38 wieder ein Stoppsignal an die Abzugswalzen 18 und ein Signal an die Pneumatik 26, den Abstand des Schweißkopfes 24 von der Pneumatik 26 wieder von B auf D zu erhöhen. Durch entsprechende Wiederholung der Vorgänge entsteht ein taktweiser Betrieb, der eine hohe Durchsatzleistung ermöglicht, da der Schweißkopf 24 immer nur um den kleinen Abstand y, z.B. einige Millimeter, bewegt werden muß. Die geringe zu überwindende Höhe y benötigt auch nur eine kleine Druckluftmenge zum Betrieb der Pneumatik 26.

Aus verschiedenen Gründen kann es nötig sein, den taktweisen Betrieb der gesamten Schweißvorrichtung zu unterbrechen. Dies ist z.B. bei Wartungsarbeiten, Kontrollvorgängen oder bei der Behebung einer Fehlfunktion notwendig. Während dieser Zeit ist es nicht immer notwendig, die Heizung des Schweißkopfes 24 abzuschalten. Dies wäre aus energiespartechnischen Gründen und aus Gründen der Zeitersparnis ungünstig, da ein Wiederaufwärmen des Schweißkopfes eine große Energie benötigt und lange dauert. Während des Stillstandes der Folienweiterförderung besteht jedoch die Gefahr der Überhitzung des Folienmateriales durch den heißen Schweißkopf.

Um eine dadurch mögliche Schädigung des Folienmateriales zu vermeiden, gibt die Steuerung 38 ein Signal an die zweite Pneumatik 28, wenn der Betrieb der gesamten Schweißvorrichtung unterbrochen wird. Ein solches Signal kann z.B. direkt ausgelöst werden, wenn eine Bedienungsperson die Förderung des Folienmateriales stoppt, oder automatisch ausgelöst werden, wenn die Folienförderung über einen vorbestimmten Zeitraum stillsteht.

Das Signal an die zweite Pneumatik 28 löst eine Verringerung des Abstandes C der ersten Pneumatik 26 von der zweiten Pneumatik 28 auf einen Abstand A aus (s. Figur 2a). Auf diese Weise wird der Abstand x des Schweißkopfes 24 von dem Folienmaterial 2, 4 bzw. 30 vergrößert, z.B. auf einige Zentimeter. So ist eine Schädigung des Folienmateriales durch die Hitze des Schweißkopfes 24 ausgeschlossen.

Wird besonders temperaturempfindliches Folienmaterial verarbeitet, so kann zusätzlich ein Abschirmblech vorgesehen sein, das gleichzeitig mit der Aktivierung der zweiten Pneumatik 28 zwischen den Schweißkopf und das Folienmaterial geschwenkt wird, um die Wärme des heißen Schweißkopfes 24 von dem Folienmaterial abzuhalten. Wird der Schweißkopf 24 wieder aus der Ruhestellung abgesenkt, so wird gleichzeitig auch das Abschirmblech wieder weggeschwenkt.

Bei dem vorliegenden Ausführungsbeispiel werden die Folienmaterialien 2 und 4 zur Bildung der Seitenfolien eines Folienbeutels 32 eingesetzt. In den Figuren 1 und 2 ist der Übersichtlichkeit halber die dritte Zuführeinrichtung für das Folienmaterial der Bodenfolie nicht gezeigt, welches zwischen die Folienmaterialien 2 und 4 gelegt wird und gleichzeitig durch die Schweißeinrichtung 36 mit verschweißt wird.

Abweichend von der Form der Folienbeutel, die bei dem beschriebenen Ausführungsbeispiel verarbeitet werden, kann die erfindungsgemäße Vorrichtung auch zur Verarbeitung von Folienbeuteln eingesetzt werden, bei denen die Seitenfolien ohne eine zusätzliche Bodenfolie direkt miteinander verschweißt werden. Dann ist eine dritte Zuführeinrichtung für Folienmaterial nicht notwendig.

Beschrieben ist eine Vorrichtung, die die Folien direkt miteinander verschweißt. Bei entsprechender Auswahl eines Klebemittels kann auch eine Heißverklebung bzw. eine Heißverschweißung mit der Schweißeinrichtung 36 durchgeführt werden.

Die Steuerung 38 kann so ausgestaltet sein, daß nicht nur bei einer Unterbrechung der Folienförderung die Ruhestellung gemäß der Figur 2a eingenommen wird. Vielmehr kann die Steuerung 38 auch so ausgestaltet sein, daß bei einem langsam gewählten Takt der Abzugswalzen 18 der Schweißkopf 24 während der Weiterförderung des Folienmateriales nicht die Zwischenstellung einnimmt, sondern die Ruhestellung, die in Figur 2a gezeigt ist. Dazu kann eine Eingabemöglichkeit an der Steuerung vorgesehen sein, mit deren Hilfe eine Bedienungsperson einen Mindesttakt angeben kann, bei welchem während der Folienweiterförderung nur die Zwischenstellung gemäß der Figur 2b eingenommen wird und nicht die Ruhestellung gemäß der Figur 2a.

Die Schweißeinrichtung 36 der beschriebenen Ausführungsform realisiert die verschiedenen Stellungen des Schweißkopfes mit Hilfe zweier in Serie geschalteter Pneumatiken.

## Patentansprüche

1. Schweißvorrichtung zum Verschweißen von Folienmaterial, insbesondere zur Herstellung von Folienbeuteln, mit einer Folienfördereinrichtung (16, 18) zum Zuführen des zu verschweißenden Folienmateriales und einer Schweißeinrichtung (36) mit einem Schweißkopf (24), der mindestens die folgenden drei Betriebsstellungen einnehmen kann;
I. eine Schweißstellung zur Durchführung der Folienverschweißung,
II. eine Zwischenstellung, in der der Schweißkopf (24) einen ersten vorgegebenen Abstand (y) von der Schweißstellung hat, und
III. eine Ruhestellung, in der der Schweißkopf (24) einen zweiten vorgegebenen Abstand (x) von der Schweißstellung hat, der größer ist als der erste Abstand (y)
**dadurch gekennzeichnet, dass**
die verschiedenen Stellungen des Schweißkopfs mit Hilfe zweier in Serie geschalteter Pneumatiken realisiert sind.

2. Schweißvorrichtung nach Anspruch 1,
**dadurch gekennzeichnet, dass**
der zweite Abstand (x) ausreichend groß ist, dass das Folienmaterial (2, 4, 30) von der Hitze des Schweißkopfes (24) nicht zerstört werden kann.

3. Schweißvorrichtung nach einem der Ansprüche 1 und 2,
**gekennzeichnet durch**
eine Wärmeabschirmung, die in der Ruhestellung zwischen den Schweißkopf (24) und das Folienmaterial (2, 4, 30) gebracht werden kann.

4. Schweißvorrichtung nach Anspruch 3,
**dadurch gekennzeichnet, dass**
die Wärmeabschirmung ein schwenkbares Abschirmblech umfasst.

5. Schweißvorrichtung nach einem der Ansprüche 1 bis 4,
**dadurch gekennzeichnet, dass**
der zweite Abstand (x) einige Zentimeter beträgt.

6. Schweißvorrichtung nach einem der Ansprüche 1 bis 5,
**dadurch gekennzeichnet, dass**
der erste Abstand (y) einige Millimeter beträgt.

7. Schweißvorrichtung nach einem der Ansprüche 1 bis 6,
**dadurch gekennzeichnet, dass**
die Zwischenstellung eingenommen wird, wenn die zu verschweißende Folie (2, 4) weitertransportiert wird.

8. Schweißvorrichtung nach einem der Ansprüche 1 bis 7,
**dadurch gekennzeichnet, dass**
die Ruhestellung eingenommen wird, wenn der Betrieb der Schweißvorrichtung unterbrochen wird.

9. Schweißvorrichtung nach einem der Ansprüche 1 bis 8,
**dadurch gekennzeichnet, dass**
eine erste Pneumatik (26) den Schweißkopf (24) zwischen der Schweiß- und Zwischenstellung bewegen kann.

10. Schweißvorrichtung nach einem der Ansprüche 1 bis 9,
**dadurch gekennzeichnet, dass**
eine zweite Pneumatik (28) den Schweißkopf (24) und die erste Pneumatik (26) zwischen der Zwischen- und der Ruhestellung bewegen kann.

11. Schweißvorrichtung nach einem der Ansprüche 1 bis 10,
**gekennzeichnet durch**
eine Steuerung (38), die die Fördereinrichtung (16, 18) zum Weitertransport des zu verschweißenden Folienmaterials (2, 4) ansteuert, während der Schweißkopf (24) in der Zwischenstellung ist.

12. Schweißverfahren zum Verschweißen von Folienmaterial (2, 4), insbesondere bei der Herstellung von Folienbeuteln, bei welchem ein Schweißkopf (24) auf das Folienmaterial (2, 4) abgesenkt wird, um das Folienmaterial zu verschweißen, der Schweißkopf (24) auf einen ersten Abstand (y) von dem Folienmaterial entfernt wird, während das Folienmaterial weitertransportiert wird, und der Schweißkopf (24) auf einen größeren zweiten Abstand (x) von dem Folienmaterial entfernt wird, wenn der Folienschweißbetrieb unterbrochen wird,
**dadurch gekennzeichnet, dass**
der Schweißkopf mit Hilfe zweier in Serie geschalteter Pneumatiken bewegt wird.

## Claims

1. A sealing apparatus for sealing foil material, in particular for producing foil bags, comprising a foil conveying means (16, 18) for feeding the foil material to be sealed, and a sealing means (36) including a sealing head (24) which can assume at least the three following operative positions:
i. a sealing position for performing the foil sealing operation,
ii. an intermediate position in which the sealing head (24) has a first predetermined distance (y) from the sealing position, and
iii. an inoperative position in which the sealing head (24) has a second predetermined distance (x) from the sealing position that is greater than the first distance (y)
**characterized in that**
the different positions of the sealing head are realized with the help of two series-connected pneumatic means.

2. The sealing apparatus according to claim 1,
**characterized in that**
the second distance (x) is sufficiently large so that the foil material (2, 4, 30) cannot be destroyed by the heat of the sealing head (24).

3. The sealing apparatus according to any one of claims 1 and 2,
**characterized by**
a heat shield which in the inoperative position can be moved between the sealing head (24) and the foil material (2, 4, 30).

4. The sealing apparatus according to claim 3,
**characterized in that**
the heat shield comprises a pivotable shield plate.

5. The sealing apparatus according to any one of claims 1 to 4,
**characterized in that**
the second distance (x) is a few centimeters.

6. The sealing apparatus according to any one of claims 1 to 5,
**characterized in that**
the first distance (y) is a few millimeters.

7. The sealing apparatus according to any one of claims 1 to 6,
**characterized in that**
the intermediate position is assumed when the foil (2, 4) to be sealed is further transported away.

8. The sealing apparatus according to any one of claims 1 to 7,
**characterized in that**
the inoperative position is assumed when the operation of the sealing apparatus is interrupted.

9. The sealing apparatus according to any one of claims 1 to 8,
**characterized in that**
a first pneumatic means (26)can move the sealing head (24) between the sealing position and the intermediate position.

10. The sealing apparatus according to any one of claims 1 to 9,
**characterized in that**
a second pneumatic means (28) can move the sealing head (24) and the first pneumatic means (26) between the intermediate position and the inoperative position.

11. The sealing apparatus according to any one of claims 1 to 10,
**characterized by**
a control unit (38) for activating the conveying means (16, 18) for the further transportation of the foil material (2, 4) to be sealed while the sealing head (24) is in the intermediate position.

12. A sealing method for sealing foil material (2, 4), in particular when foil bags are produced, wherein a sealing head (24) is lowered onto the foil material (2, 4) to seal the foil material, the sealing head (24) is removed from the foil material to a first distance (y) during the further transportation of the foil material, and the sealing head (24) is removed from the foil material to a greater second distance (x) when the foil sealing operation is interrupted,
**characterized in that**
the sealing head is moved with the help of two series-connected pneumatic means.

## Revendications

1. Dispositif de soudage pour souder un matériau en feuille, en particulier pour fabriquer des sachets en film souple, comportant un dispositif de transport de feuille (16, 18) destiné à amener le matériau en feuille à souder et un dispositif de soudage (36) équipé d'une tête de soudage (24) qui peut adopter au moins les trois positions de fonctionnement suivantes :
I. une position de soudage pour exécuter le soudage des feuilles,
II. une position intermédiaire dans laquelle la tête de soudage (24) présente un premier écartement (y) prédéterminé par rapport à la position de soudage, et
III. une position de repos dans laquelle la tête de soudage (24) présente, par rapport à la position de soudage, un second écartement (x) prédéterminé qui est supérieur au premier écartement (y),
**caractérisé en ce que**
les différentes positions de la tête de soudage sont réalisées à l'aide de deux dispositifs pneumatiques montés en série.

2. Dispositif de soudage selon la revendication 1,
**caractérisé en ce que**
le second écartement (x) est suffisamment grand pour que le matériau en feuille (2, 4, 30) ne puisse pas être détruit par la chaleur provenant de la tête de soudage (24).

3. Dispositif de soudage selon une des revendications 1 et 2,
**caractérisé par**
un écran thermique qui, dans la position de repos, peut être placé entre la tête de soudage (24) et le matériau en feuille (2, 4, 30).

4. Dispositif de soudage selon la revendication 3,
**caractérisé en ce que**
l'écran thermique comprend une tôle de protection pivotante.

5. Dispositif de soudage selon une des revendications 1 à 4,
**caractérisé en ce que**
le second écartement (x) est de quelques centimètres.

6. Dispositif de soudage selon une des revendications 1 à 5,
**caractérisé en ce que**
le premier écartement (y) est de quelques millimètres.

7. Dispositif de soudage selon une des revendications 1 à 6,
**caractérisé en ce que**
la position intermédiaire est adoptée lorsque la feuille (2, 4) à souder continue à être transportée.

8. Dispositif de soudage selon une des revendications 1 à 7,
**caractérisé en ce que**
la position de repos est adoptée lorsque le fonctionnement du dispositif de soudage est interrompu.

9. Dispositif de soudage selon une des revendications 1 à 8,
**caractérisé en ce que**
un premier dispositif pneumatique (26) peut déplacer la tête de soudage (24) entre la position de soudage et la position intermédiaire.

10. Dispositif de soudage selon une des revendications 1 à 9,
**caractérisé en ce que**
un second dispositif pneumatique (28) peut déplacer la tête de soudage (24) et le premier dispositif pneumatique (26) entre la position intermédiaire et la position de repos.

11. Dispositif de soudage selon une des revendications 1 à 10,
**caractérisé par**
une commande (38) qui commande le dispositif de transport (16, 18) pour continuer à transporter le matériau en feuille (2, 4) à souder pendant que la tête de soudage (24) est dans la position intermédiaire.

12. Procédé de soudage pour souder un matériau en feuille (2, 4), en particulier pour la fabrication de sachets en film souple, procédé selon lequel on abaisse une tête de soudage (24) sur le matériau en feuille (2, 4) pour souder le matériau en feuille, on éloigne la tête de soudage (24) du matériau en feuille pour l'amener à un premier écartement (y) tandis que l'on continue à transporter le matériau en feuille, et on éloigne la tête de soudage (24) du matériau en feuille pour l'amener à un deuxième écartement (x) plus grand, lorsque le soudage de feuille est interrompu,
**caractérisé en ce que**
la tête de soudage est déplacée à l'aide de deux dispositifs pneumatiques montés en série.
